# EUROPEAN PATENT SPECIFICATION

(11) **EP 0 773 106 B1**
(45) Date of publication and mention of the grant of the patent: **19.04.2000**
(21) Application number: 96915162.0
(22) Date of filing: 16.05.1996
(51) Int. Cl.: B41F 33/00, B41F 13/00, B41F 13/12, F16H 1/32, F16H 37/08, F16H 35/00

(54) **PHASE ADJUSTMENT APPARATUS**
VORRICHTUNG ZUM EINSTELLEN DER PHASE
DISPOSITIF DE REGLAGE DE PHASE

(30) Priority: 18.05.1995 JP 11941195
(43) Date of publication of application: 14.05.1997
(73) Proprietor: HARMONIC DRIVE SYSTEMS INC., Shinagawa-ku, Tokyo 140 (JP)
(72) Inventor: TANAKA, Kazuo Harmonic Drive Systems Inc., Minamiazumi-gun, Nagano-ken 399-83 (JP); KIYOSAWA, Yoshihide Harmonic Drive Systems Inc., Minamiazumi-gun, Nagano-ken 399-83 (JP)
(74) Representative: Klunker . Schmitt-Nilson . Hirsch
(86) International application number: JP9601290
(87) International publication number: WO9636489

(56) References cited:
- DE-A- 4 110 195
- JP-A- 5 138 854
- JP-A- 6 337 045
- US-A- 4 922 790

## Description

### TECHNICAL FIELD

The present invention relates to a phase adjusting device for performing phase adjustment between a plurality of rotary bodies driven to rotate by the same motor.

### BACKGROUND ART

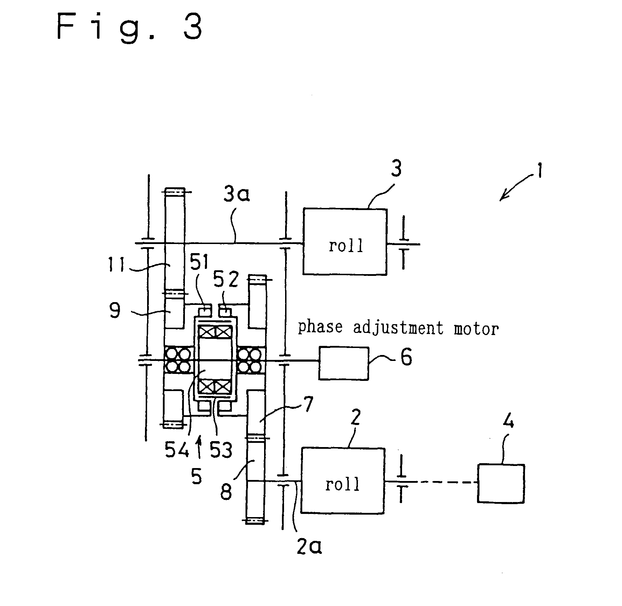

In a driving system for printing rolls of a multi-color printing press or so forth, it is possible that two or more rolls are driven to rotate by the same driving motor and phase adjustment is required between those rollers. Therefore, in the prior art, a phase adjustment device as shown in Fig. 3 is employed, for example.

A shown phase adjustment device 1 is adapted to perform phase adjustment between printing rolls 2 and 3. A power transmission system is so constructed that the rolls 2 and 3 are driven to rotate by the same driving motor 4. Namely, one of the roll 2 is directly driven to rotate by the driving motor 4, and the other roll 5 is driven to rotate by the same driving motor 4 via a rotational torque transmitting path constituted of a gear train and a phase adjusting speed reduction unit 5. The phase adjusting speed reduction unit 5 can be driven by a phase adjusting motor 6 during phase adjustment.

The phase adjusting speed reduction unit 5 is a differential gear unit, here a wave motion gear type speed reduction gear unit is used. The wave motion type speed reduction gear unit is constructed with annular rigid internal gears 51 and 52 arranged in parallel in coaxial condition, an annular flexible external gear 53 disposed in the annular rigid internal gears, and a wave motion generator 54 disposed inside of the annular flexible external gear. The wave motion generator 54 generally has an elliptic-shaped contour. By this wave motion generator 54, the flexible external gear 53 is deformed into an elliptic-shaped configuration. To both ends in the major axis direction of the elliptic configuration, the rigid internal gears 51 and 52 are meshed. When the wave motion generator 54 in the meshing condition as set forth above is driven for revolution, these meshing positions are displaced in the circumferential direction. While number of teeth of the flexible external gear 53 and number of teeth of one of the rigid internal gear 51 are the same, the other rigid internal gear 52 is provided greater number of teeth by two, for example. Therefore, when the wave motion generator 54 is rotated and thus the meshing positions between the flexible external gear 53 and the rigid internal gears 51 and 52 are shifted in the circumferential direction, the flexible external gear 53 and the rigid internal gear 51 having mutually the same number of teeth rotate integrally, whereas the other rigid internal gear 52 rotates relatively to these gears. Accordingly, by fixing one of the rigid internal gear, high speed rotation input from the wave motion generator 54 is output from the other rigid internal gear at significantly reduced speed. Since the principle of this type of speed reduction unit is known, further explanation is neglected here.

In the phase adjustment speed reduction unit 5 of the construction set forth above, the wave motion generator 54 is driven to rotate by the phase adjustment motor 6. On the outer periphery of the rigid internal gear 52, a gear 7 is fixed. This gear 7 is meshed with a gear 8 which is mounted on a rotary shaft 2a. Also, on the outer periphery of the other rigid internal gear 51, a gear 9 is fixed. This gear 9 is meshed with a gear 11 which is mounted on a rotary shaft 3a.

Operation of the phase adjustment device 1 is explained. At first, in normal operation, namely when phase adjustment is not performed, the phase adjustment motor 6 is not driven, and brake is applied. Accordingly, the roll 2 and the roll 3 are driven by the driving motor 4. Namely, the roll 3 is driven by the motor 4 via a power transmission path reaching the rotary shaft 3a of the roll 3 via the gear train (8, 7), the phase adjusting speed reduction unit 5, the gear train (9, 11).

When phase adjustment is required, with fixing the rigid internal gear 52 coupled with the roll 2, the phase adjustment motor 6 is driven for revolution. The rotation of the motor 6 is significantly decelerated via the phase adjusting speed reduction unit 5 and output from the other rigid internal gear 51. By reduced rotation thus obtained, the roll 3 is slightly rotated and whereby the phase between the roll 2 and the roll 3 is adjusted.

In the conventional phase adjustment device, the phase adjusting speed reduction unit 5 is constructed to be meshed to be coupled with the roll 2 at the side of the driving power source at one side and to be meshed to be coupled with the roller at driven side, at the other end. Accordingly, installing and uninstalling operation of the phase adjustment device requires operation to disassemble respective parts arranged therearound, and thus cannot be done easily. Also, assembling operation is not easy.

### DISCLOSURE OF THE INVENTION

With keeping the foregoing in mind, it is an object of the present invention to make efficient installation and uninstallation operation possible by forming a phase adjustment device as a unit. Also, an object of the present invention is to enable phase adjustment with further higher precision.

In order to solve the foregoing object, the present invention employs the following construction in a phase adjustment gear device for performing phase adjustment between a first and second rotary bodies driven for rotation by the same driving motor, which phase adjustment gear device is disposed in a rotational torque transmission path from said driving motor to said second rotary body, rotatingly driven by a phase adjustment motor for performing phase adjustment operation of said second rotary body relative to said first rotary body.

Namely, the phase adjustment gear device, according to the present invention, employs a hollow casing, a hollow input shaft rotatably supported within said hollowing casing in coaxial fashion, a cup-shaped first wave motion gear unit arranged within said hollow casing at rear end sides of said input shaft and said output shaft in coaxial fashion, a hollow shaft rotatably supported within said hollow casing at the rear end side of said first wave motion gear unit in coaxial fashion, a cup-shaped second wave motion gear unit arranged at rear end side of said hollow shaft, and a gear train transmitting rotation of said input shaft to said hollow shaft. A rigid internal gear in said first wave motion gear unit is fixed to a rear end of said input shaft, and a rear end of said output shaft is fixed on a bottom of a cut of a cup-shaped flexible external gear. A rigid internal gear in said second wave motion gear unit is fixed to a rear end side of said hollow shaft, and a bottom surface of a cut of a cup-shaped flexible external gear is connected to a wave motion generator of said first wave motion gear unit. A speed ratio of the rotational torque transmission path via a gear train and said second wave motion gear unit is set so that, in a condition where a wave motion generator of said second wave motion gear device is fixed, said cup-shaped flexible external gear of said second wave motion gear device being rotated at the same rotation speed as said input shaft, and to said wave motion generator of said second wave motion gear unit, an output shaft of said phase adjustment motor is connectable.

Here, it is preferred that the input shaft has a connecting spline connectable with a transmission element for transmitting a rotational torque from said driving motor, at a tip end portion projecting from a tip end opening of said hollowing casing, and said output shaft has a connecting spline connectable with a transmission element for transmitting a rotational torque from said output shaft, at a tip end portion, on said second rotary body side.

On the other hand, the phase adjustment motor is mounted at the rear end side of said hollowing casing of the phase adjustment gear device constructed as set forth above, to construct a phase adjustment unit.

The phase adjustment gear device according to the present invention, extends the input shaft and the output shaft in coaxial condition at one side. Accordingly, by arranging a setting portion which can accommodate these shafts from one end, in the power transmission path between the driving motor and the second rotary body, installing operation of the phase adjustment gear device according to the invention can be easily performed from one side. Also, removal operation can be done easily by pulling out the device toward the one side. Particularly, in the construction where the spline shafts for connection are provided at tip ends of the input and output shafts, installing operation of the device can be quite easily. Furthermore, similar is true for the case of the phase adjustment unit according to the present invention, in which the phase adjustment motor is also integrated.

On the other hand, in the phase adjustment gear device according to the present invention, the cup-type first and second wave motion gear device connected in longitudinal alignment are provided. Accordingly, in phase adjustment, revolution speed of the phase adjustment motor is decelerated in two stages via these wave motion gear devices. Thus, since rotation is significantly decelerated, quite high precision phase adjustment can be realized.

### BRIEF DESCRIPTION OF THE DRAWING

Fig. 1 is a longitudinal section showing an example of a phase adjustment unit, to which the present invention is applied;
Fig. 2 is a general constructional illustration showing a phase adjustment mechanism for performing phase adjustment between rolls in a multi-color printing press, in which the phase adjustment unit of Fig. 1 is installed; and
Fig. 3 is a general constructional illustration showing the phase adjustment mechanism performing phase adjustment between rolls in the conventional multi-color printing press.

### BEST MODE FOR IMPLEMENTING THE INVENTION

A phase adjustment device, to which the present invention is applied, will be described hereinafter with reference to the drawings.

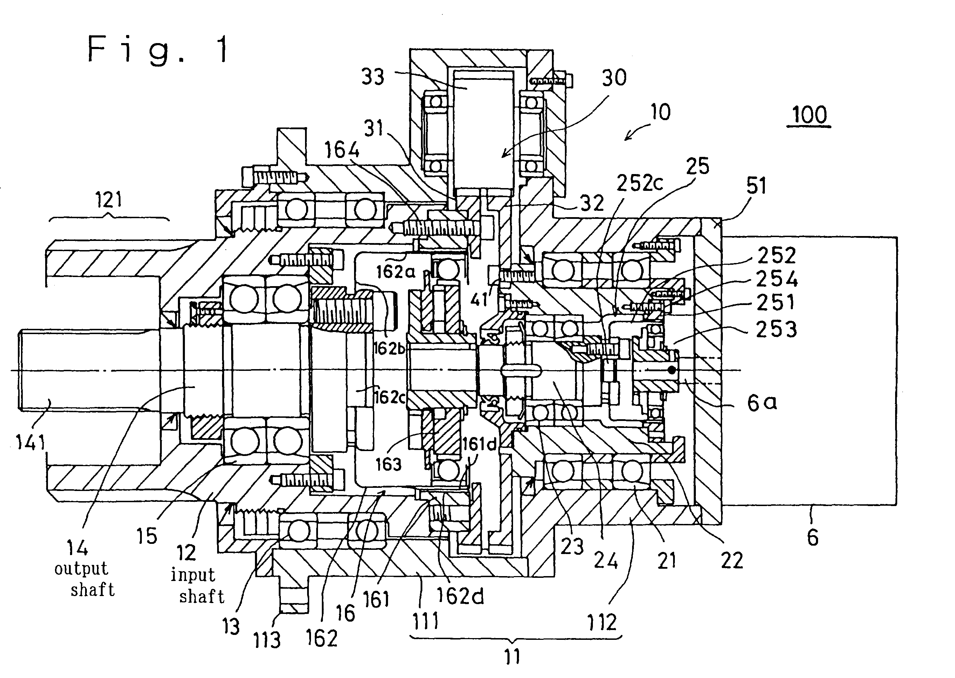

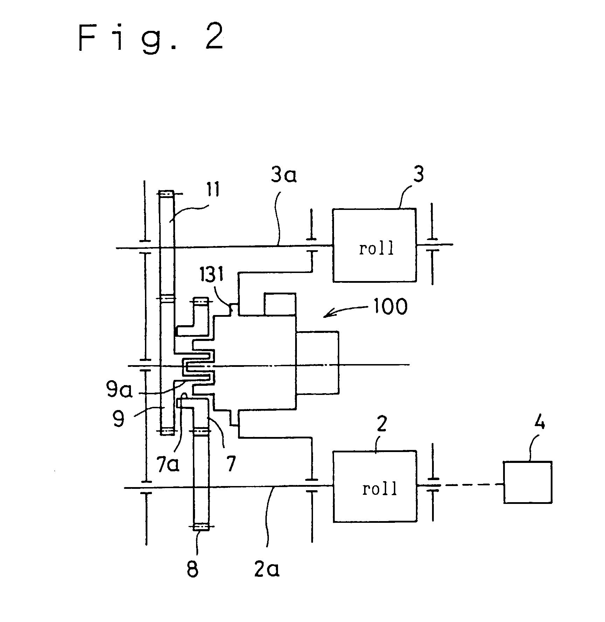

In Fig. 1, there is illustrated a construction of a phase adjustment unit, to which the present invention is applied. In Fig. 2, there is illustrated a phase adjustment mechanism for performing phase adjustment between rolls in a multi-color printing press or so forth, in which the phase adjustment unit is installed.

At first, the construction of the phase adjustment unit will be described with reference to Fig. 1. The shown embodiment of the phase adjustment unit 100 is constructed with a phase adjustment gear device 10 and a phase adjustment motor 6 fitted on the rear end of the phase adjustment gear device. The phase adjustment gear device 10 has a cylindrical casing 11. The casing 11 is constructed with a tip end side portion 111 and a rear end side portion 112. On the outer periphery of the tip end side portion of the casing, an annular mounting flange 113 is formed. On the inner side of the tip end portion 111 of the casing, a hollow input shaft is rotatably supported in coaxial fashion via a bearing 13. A tip end portion 121 of an input shaft 12 is extended from the tip end surface of the casing 11 and splines are formed on the outer periphery to for a spline shaft.

In the inside of the hollow casing 11, a solid output shaft 14 is rotatably supported in coaxial condition via a bearing 15. A tip end portion 141 of the output shaft 12 is extended into a large diameter hollow portion formed at the tip end portion 141 of the output shaft 14. At this portion, splines are formed on the outer periphery thereof to form a spline shaft.

In the inside of the hollow casing 11, at a position at rear end side of the input shaft 12 and the output shaft 14, a cup-shaped first wave motion gear device 16 is arranged. The wave motion gear device 16 is constructed with an annular rigid internal gear 161, a cup-shaped flexible external gear 162 arranged at the inside of the rigid internal gear 161, and a wave motion gear 163 mounted inside of the flexible wave motion generator 11. The wave motion generator 163 has an elliptic -shaped configuration, for example. With deforming the flexible external gear 162 into the elliptic-shape, the external gear is meshed with the rigid internal gear 161. Number of teeth of the flexible external gear 162 is lesser than number of teeth of the rigid internal gear 161 by two, for example. Accordingly, by rotating the wave motion generator 163, the meshing positions of these gears are shifted in circumferential direction to cause relative rotation depending upon a difference in number of teeth between both gears.

In the shown embodiment, with respect to the rear end face of the input shaft 12, an annular end face of the rigid internal gear 161 is fixed by means of fastening bolts 164. A cut-shaped flexible external gear 162 disposed inside of the gear 161 is formed with a cylindrical body portion 162a and thick boss 162c. On an outer periphery of an opening side tip end portion of the body portion 162a, external gear teeth 162d are formed. The external gear teeth 162d can mesh with internal gear teeth 161d of the rigid internal gear 161. The flexible external gear 162 is arranged in orientation the bottom surface of the cup thereof toward the output shaft 14. At the rear end of the output shaft 14, a boss 162 is coaxially fixed.

On the other hand, on the inside of the portion 112 at the rear end side of the hollow casing 11, a hollow shaft 22 is rotatable supported in coaxial fashion via the bearing 21. Also, within the inside of the hollow shaft 22, a rotary shaft 24 is rotatably supported in coaxial fashion via a bearing 23. A tip end of the rotary shaft 24 is fixed to the wave motion generator 153 of the first wave motion gear unit 16. On the rear end sides of the hollow shaft 22 and the rotary shaft 24, a cup-shaped second wave motion gear unit 25 is arranged. The construction of the second wave motion gear unit 25 is similar to that of the first embodiment of the wave motion gear unit 16, and thus is constructed with an annular rigid internal gear 251, a cur-shaped internal gear 252 disposed within the annular rigid internal gear and a wave motion generator 253 installed therewithin. The second wave motion gear unit 25 is oriented in the same direction to the orientation of the first wave motion gear unit. An annular end face of the rigid internal gear 251 is fixed to the rear end face of the hollow shaft 22 by fastening bolts 254.

Here, rotation of the rigid internal gear 161 of the first wave motion gear unit 16 is transmitted to the rigid internal gear 251 of the second wave motion gear unit 25 via a gear train 30. The gear train 30 is formed with an annular driving gear 31, an annular driven gear 32 and an idler gear 33 meshing with both gears. The driving gear 31 is fixed to an end face of the rigid internal gear 161 of the first wave motion gear unit. The driven gear 32 has the same diameter as the driving gear 31 and is fixed to a tip end side end face of the hollow shaft 22 which is integrally rotated with the rigid internal gear 251 of the second wave motion gear unit.

The idler gear 33 is located radially outside relative to the gears 31 and 32. Namely, on the hollow casing 11, a projecting portion projecting radially outward is formed for installing the idler gear 33. The idler gear 33 is thus rotatably supported therein.

Next, on a rear end of the hollow casing 11, a disc shaped motor mounting flange 51 is secured for closing. On an outer side surface of the flange 51, the phase adjustment motor 6 is mounted. An output shaft 6a of the phase adjustment motor 6 extends into the casing 11 through the flange 51. The wave motion generator 263 of the second wave motion gear unit is fixed thereon.

Here, in the shown embodiment, when the wave motion generator 253 of the second wave motion gear unit is not rotated, respective portions of the first wave motion gear unit 16 rotate integrally at a rotation speed which is the same as that of the input shaft 12. Namely, in this case, a rotation force transmitting system for transmitting the rotational torque to the wave motion generator 253 is constituted so that the rigid internal gear 161 and the wave motion generator 361 of the first wave motion gear unit 16 are rotated to the same rotation speed. For instance, assuming that the speed ratio of the second wave motion gear unit 25 is 100, a ratio of number of teeth of the driving gear 31 and the driven gear 32 coupled via the idler gear 33, is set to be 101 : 100.

By the setting as set forth above, assuming the rotation speed of the input shaft is Ni, then rigid internal gear 161 of the first wave motion gear unit is rotated at the same rotation speed Ni. The rotation speed is reduced through the gear train 30 and the hollow shaft 22 to be decelerated into the speed N1 which is 100/101 of Ni, and transmitted to the rigid internal gear 251 of the second wave motion gear unit 25. Since the speed ratio of the second wave motion gear unit 25 is 100 and the wave motion generator 253 is fixed, an output rotation speed No from the flexible external gear 252 becomes a value reduced by a speed reduction ratio i = (R + 1)/R. Namely, in the shown case, i = 101/100. Therefore, the output rotation speed No becomes equal to the rotation speed of the wave motion generator 163. Thus, the wave motion generator 163 of the first wave motion gear unit fixed to the rotary shaft which is rotated at the rotation speed No, also rotates at the rotation speed No.

As a result, in the first wave motion gear unit 16, since the rigid internal gear 161 and the wave motion generator 163 are rotated at the same rotation speed, the rigid internal gear 161, the flexible external gear 162 and the wave motion generator 163 are integrally rotated. Thus, the output shaft 14 fixed to the flexible external gear 162 rotates at the same rotation speed.

As set forth above, in the shown embodiment of the phase adjustment gear device 10, while the phase adjustment motor 6 mounted thereon is held stopped, the wave motion generator 253 of the second wave motion gear unit is fixed, a ratio of the input rotation speed Ni at the input shaft 12 and the output rotation speed No from the output shaft 14 becomes 1 : 1.

In contrast to this, when the phase adjustment motor 6 is driven for revolution, the revolution speed thereof is decelerated at a speed reduction ratio i = -1/R via the second wave motion gear unit 24 for rotation of the rotary shaft 24 at the reduced speed. Also, rotation of the rotary shaft is decelerated similarly via the first wave motion gear unit 16 to cause rotation of the output shaft. As a result, the output shaft 14 rotates relative to the input shaft 12 to permit phase adjustment between these shafts.

In Fig. 2, a phase adjustment mechanism incorporating the phase adjustment unit 100 constructed as set forth above, is illustrated. The overall construction of this mechanism is similar to the conventional mechanism explained with reference to Fig. 3. By the driving motor 4, the roll 2 is driven to rotate. Revolution of the motor is transmitted to the roll 3 via the rotational torque transmitting path to rotate the roll 3. Here, at a center of the gear 7 meshing with the gear 8 of the roll shaft 2a, an input shaft setting portion 7a provided with splines on the inner peripheral surface, is formed so that a spline shaft 121 at a tip end portion of the input shaft 12 of the phase adjustment unit 100 can be engaged therein. Similarly, on the end face of the gear 8, an output shaft setting portion 9a formed with splines on the inner peripheral surface, is provided integrally so that a spline shaft 141 at a tip end portion of the output shaft 14 of the phase adjustment unit 100 can be engaged therein.

Accordingly, the phase adjustment unit can be installed to a printing press by inserting the input and output shafts to respective setting portions 7a and 9a from one side and by securing the flange 113 formed on the outer periphery of the casing 11 onto the printing press by means of fastening bolts or so forth. Similarly, the phase adjustment unit can be removed by pulling out toward the one side.

During normal operation, the phase adjustment motor 6 is not driven and the output shaft is held in locked state. At this condition, when the driving motor 4 is driven for revolution, rotational torque thereof is transmitted to the gear 7 having the same number of teeth to the gear 8, via the roll 2 and the gear 8 which is fixed to the shaft 2a of the roll 2. Since the input shaft 12 of the phase adjustment unit 100 is fixed on the gear 7, the input shaft 12 is rotated at the equal speed to the rotation speed Ni of the roll 2. As set forth above, when the phase adjustment motor 6 is held stopped state, the ratio of the rotation speeds of the input and output shafts of the phase adjustment unit 100 is 1 : 1. Thus, the rotation speed is output from the unit 100 with maintaining the same speed to rotate the gear 9 at the same rotation speed. The gear 9 is meshed with the gear 11 having the same number of teeth, and the gear 11 is fixed to the rotary shaft 3a of the roll 3, the roll 3 is rotated at the same speed as that of the roll 2.

In contrast to this, upon phase adjustment, since the phase adjustment motor 6 is driven for revolution, the output shaft 14 of the phase adjustment unit 100 causes relative rotation relative to the input shaft 12. This operation is also set forth above. In this case, phase adjustment is performed in the condition where the revolution speed of the phase adjustment motor 6 is significantly reduced by the first and second wave motion gear units 16 and 25. Therefore, phase adjustment can be done at high accuracy.

### INDUSTRIAL APPLICABILITY

As explained above, the phase adjustment gear device of the present invention, and the phase adjustment unit, which is a combination of the phase adjustment gear device and the phase adjustment motor has the input and output shafts at the same side. Accordingly, with respect to the rotational torque transmission path between the rolls of the printing press, the unit can be installed with simple operation from one side, and removal operation is also simplified. Particularly, when the spline shafts are formed at the tip end portions of the input and output shafts, such installation and removal can be done simply.

On the other hand, in the present invention, first and second wave motion gear units are provided so that the revolution speed of the phase adjusting motor can be decelerated significantly via these units upon phase adjustment. Accordingly, phase adjustment between the rolls can be done with quite high precision.

## Claims

1. A phase adjustment gear device for performing phase adjustment between a first and second rotary bodies driven for rotation by the same driving motor, which phase adjustment gear device is disposed in a rotational torque transmission path from said driving motor to said second rotary body, rotatingly driven by a phase adjustment motor for performing phase adjustment operation of said second rotary body relative to said first rotary body, comprising:
a hollow casing, a hollow input shaft rotatably supported within said hollowing casing in coaxial fashion, a cup-shaped first wave motion gear unit arranged within said hollow casing at rear end sides of said input shaft and said output shaft in coaxial fashion, a hollow shaft rotatably supported within said hollow casing at the rear end side of said first wave motion gear unit in coaxial fashion, a cup-shaped second wave motion gear unit arranged at rear end side of said hollow shaft, and a gear train transmitting rotation of said input shaft to said hollow shaft,
a rigid internal gear in said first wave motion gear unit being fixed to a rear end of said input shaft, and a rear end of said output shaft being fixed on a bottom of a cup of a cup-shaped flexible external gear,
a rigid internal gear in said second wave motion gear unit being fixed to a rear end side of said hollow shaft, and a bottom surface of a cup of a cup-shaped flexible external gear being connected to a wave motion generator of said first wave motion gear unit;
a speed ratio of the rotational torque transmission path via a gear train and said second wave motion gear unit being set so that, in a condition where a wave motion generator of said second wave motion gear device is fixed, said cup-shaped flexible external gear of said second wave motion gear device being rotated at the same rotation speed as said input shaft; and
to said wave motion generator of said second wave motion gear unit, an output shaft of said phase adjustment motor being connectable.

2. A phase adjustment gear device as set forth in claim 1, wherein said input shaft has a connecting spline connectable with a transmission element for transmitting a rotational torque from said driving motor, at a tip end portion projecting from a tip end opening of said hollowing casing, and said output shaft has a connecting spline connectable with a transmission element for transmitting a rotational torque from said output shaft, at a tip end portion, on said second rotary body side.

3. A phase adjustment unit constructed with the gear device as defined in claim 2 and said phase adjustment motor mounted at the rear end side of said hollowing casing, and the output shaft of said motor being connected to said wave motion generator of said second wave motion gear device.

## Patentansprüche

1. Eine Phaseneinstellgetriebeeinrichtung zum Ausführen einer Phaseneinstellung zwischen einem ersten drehbaren Körper und einem zweiten drehbaren Körper, wobei diese drehbaren Körper durch den gleichen Antriebsmotor zur Drehung angetrieben werden und wobei die Phaseneinstellgetriebeeinrichtung in einem Drehmomentübertragungsweg von dem Antriebsmotor zu dem zweiten drehbaren Körper angeordnet ist und von einem Phaseneinstellmotor zum Ausführen des Vorgangs der Phaseneinstellung des zweiten drehbaren Körpers relativ zu dem ersten drehbaren Körper drehbar angetrieben wird, aufweisend:
ein hohles Gehäuse, eine hohle Eingangswelle, die koaxial innerhalb des hohlen Gehäuses drehbar gelagert ist, eine erste, topfförmige Wellenbewegungsgetriebeeinheit, die koaxial innerhalb des hohlen Gehäuses an einer jeweiligen hinteren Endseite der Eingangswelle und der Ausgangswelle angeordnet ist, eine Hohlwelle, welche koaxial innerhalb des hohlen Gehäuses an der hinteren Endseite der ersten Wellenbewegungsgetriebeeinheit drehbar gelagert ist, eine zweite, topfförmige Wellenbewegungsgetriebeeinheit, die an einer hinteren Endseite der Hohlwelle angeordnet ist, und einen Getriebezug, welcher die Drehung der Eingangswelle zu der Hohlwelle überträgt,
wobei ein starres Zahnrad mit Innenverzahnung in der ersten Wellenbewegungsgetriebeeinheit an einem hinteren Ende der Eingangswelle befestigt ist und ein hinteres Ende der Ausgangswelle an einem Boden eines Topfes eines topfförmigen, verformbaren Zahnrads mit Außenverzahnung befestigt ist,
wobei ein starres Zahnrad mit Innenverzahnung in der zweiten Wellenbewegungsgetriebeeinheit an der hinteren Endseite der Hohlwelle befestigt ist und eine Bodenseite eines Topfes eines topfförmigen, verformbaren Zahnrads mit Außenverzahnung mit einem Wellenbewegungsgenerator der ersten Wellenbewegungsgetriebeeinheit verbunden ist,
wobei ein Drehzahlverhältnis des Drehmomentübertragungswegs durch einen Getriebezug und die zweite Wellenbewegungsgetriebeeinheit so eingestellt ist, daß in einem Zustand, in dem ein Wellenbewegungsgenerator der zweiten Wellenbewegungsgetriebeeinrichtung feststehend ist, das topfförmige, verformbare Zahnrad mit Außenverzahnung der zweiten Wellenbewegungsgetriebeeinrichtung mit der gleichen Drehzahl wie die Eingangswelle gedreht wird, und
wobei mit dem Wellenbewegungsgenerator der zweiten Wellenbewegungsgetriebeeinheit eine Ausgangswelle des Phaseneinstellmotors verbindbar ist.

2. Eine Phaseneinstellgetriebeeinrichtung, wie in Anspruch 1 angegeben, bei welcher die Eingangswelle eine koppelnde Verzahnung, die mit einem Übertragungselement zum Übertragen eines Drehmoments von dem Antriebsmotor koppelbar ist, an einem vorderen Endbereich aufweist, der von einer vorderen Öffnung des hohlen Gehäuses vorsteht, und die Ausgangswelle eine koppelnde Verzahnung, die mit einem Übertragungselement zum Übertragen eines Drehmoments von der Ausgangswelle koppelbar ist, an einem vorderen Endbereich an der Seite des zweiten drehbaren Körpers aufweist.

3. Eine Phaseneinstelleinheit, welche mit der Getriebeeinrichtung, wie in Anspruch 2 definiert, und dem Phaseneinstellmotor versehen ist, der an der hinteren Endseite des hohlen Gehäuses angebracht ist, wobei die Ausgangswelle dieses Motors mit dem Wellenbewegungsgenerator der zweiten Wellenbewegungsgetriebeeinrichtung verbunden ist.

## Revendications

1. Dispositif à engrenage d'ajustement de phase destiné à réaliser un ajustement de phase entre un premier et un deuxième corps rotatif entraînés en rotation par le même moteur d'entraînement, lequel dispositif à engrenage d'ajustement de phase est disposé dans un passage de transmission de couple de rotation dudit moteur d'entraînement vers ledit deuxième corps rotatif, entraîné en rotation par un moteur d'ajustement de phase destiné à réaliser l'opération d'ajustement de phase dudit deuxième corps rotatif par rapport au dit premier corps rotatif, comportant :
un carter creux, un arbre d'entrée creux supporté de façon rotative dans ledit carter creux d'une manière coaxiale, une première unité à engrenage à mouvement ondulatoire en forme de coupe disposée à l'intérieur dudit carter creux au niveau des côtés d'extrémité arrière dudit arbre d'entrée et dudit arbre de sortie d'une manière coaxiale, un arbre creux supporté de façon rotative dans ledit carter creux au niveau du côté d'extrémité arrière de ladite première unité à engrenage à mouvement ondulatoire d'une manière coaxiale, une deuxième unité à engrenage à mouvement ondulatoire en forme de coupe disposée au niveau du côté d'extrémité arrière dudit arbre creux, et un train d'engrenage transmettant la rotation dudit arbre d'entrée vers ledit arbre creux,
un pignon interne rigide dans ladite première unité à engrenage à mouvement ondulatoire étant fixé sur une extrémité arrière dudit arbre d'entrée, et une extrémité arrière dudit arbre de sortie étant fixée sur un fond d'une coupe d'un pignon externe flexible en forme de coupe,
un pignon interne rigide dans ladite deuxième unité à engrenage à mouvement ondulatoire étant fixé sur un côté d'extrémité arrière dudit arbre creux, et une surface du fond d'une coupe d'un pignon externe flexible en forme de coupe étant reliée à un générateur de mouvement ondulatoire de ladite première unité à engrenage à mouvement ondulatoire;
un rapport de vitesse du passage de transmission de couple de rotation par l'intermédiaire d'un train d'engrenage et de ladite deuxième unité à engrenage à mouvement ondulatoire étant établi de telle sorte que, dans une condition où un générateur de mouvement ondulatoire dudit deuxième dispositif d'engrenage à mouvement ondulatoire est fixe, ledit pignon externe flexible en forme de coupe dudit deuxième dispositif d'engrenage à mouvement ondulatoire est entraîné en rotation à la même vitesse de rotation que ledit arbre d'entrée; et
un arbre de sortie dudit moteur d'ajustement de phase pouvant être relié au dit générateur de mouvement ondulatoire de ladite deuxième unité à engrenage à mouvement ondulatoire.

2. Dispositif à engrenage d'ajustement de phase selon la revendication 1, dans lequel ledit arbre d'entrée a une cannelure de raccordement pouvant être reliée à un élément de transmission afin de transmettre un couple de rotation provenant dudit moteur d'entraînement, au niveau d'une partie d'extrémité avant qui dépasse d'une ouverture d'extrémité dudit carter creux, et ledit arbre de sortie a une cannelure de raccordement pouvant être reliée à un élément de transmission destiné à transmettre un couple de rotation provenant dudit arbre de sortie, au niveau d'une partie d'extrémité, avant sur ledit côté de deuxième corps rotatif.

3. Unité d'ajustement de phase construite avec le dispositif à engrenage selon la revendication 2 et ledit moteur d'ajustement de phase monté au niveau du côté d'extrémité arrière dudit carter creux, l'arbre de sortie dudit moteur étant relié au dit générateur de mouvement ondulatoire dudit deuxième dispositif à engrenage à mouvement ondulatoire.
